# EUROPEAN PATENT SPECIFICATION

(11) **EP 1 789 912 B1**
(45) Date of publication and mention of the grant of the patent: **23.01.2008**
(21) Application number: 05774628.1
(22) Date of filing: 17.08.2005
(51) Int. Cl.: G06K 19/00, H01Q 1/22

(54) **METHOD OF MANUFACTURING AN RFID ANTENNA**
VERFAHREN ZUR HERSTELLUNG EINER RFID-ANTENNE
PROCEDE DE FABRICATION D'UNE ANTENNE RFID

(30) Priority: 31.08.2004 EP 04104159
(43) Date of publication of application: 30.05.2007
(73) Proprietor: Koninklijke Philips Electronics N.V., 5621 BA Eindhoven (NL)
(72) Inventor: SCHAFFLER, Gerald, A-1101 Vienna (AT)
(74) Representative: Röggla, Harald
(86) International application number: PCT/IB2005/052709
(87) International publication number: WO 2006/024980

(56) References cited:
- US-A- 2 963 748
- US-A1- 2003 011 523
- US-A1- 2003 091 789

## Description

### FIELD OF THE INVENTION

The invention relates to a method of manufacturing an antenna structure.

The invention furthermore relates to a data carrier.

### BACKGROUND OF THE INVENTION

It is known to manufacture antennas of contactless data carriers, such as smart cards for example, by means of an etching method in which, from a substrate which on one surface has an electrically conductive material, such as copper or aluminum for example, all those regions of the conductive material which do not form part of the antenna structure to be formed are etched away, and the remaining part of the conductive material forms the antenna structure. To this end, firstly the regions of the electrically conductive material which are to form the antenna structure are covered with an acid-resistant photoresist or the like, and then the conductive material is brought into contact with acid in order to carry out the etching operation. Since material is removed in this manufacturing method, it is referred to as a "subtractive" process. A further example of a subtractive process which may be mentioned is the antenna stamping method described in the document US-20030112202 A1, in which the antenna is stamped out of a flat, electrically conductive composite foil by means of a stamping tool, the cutting edges of which define the contours of the antenna that is to be manufactured.

It is furthermore known to print an antenna onto an electrically insulating substrate, wherein the printing material is a silver paste which has a relatively high specific resistance, and in a second step to apply a highly conductive material, such as copper for example, to the printed silver paste by means of electroplating, in order to achieve an overall sufficiently good electrical conductivity of the antenna. One problem here, however, is that during the electroplating operation, on account of the considerable length of the antenna (up to 1 m) and the relatively high specific electrical resistance of the silver paste, much more material accumulates at the ends of the antenna than in the central region thereof. Since, in this process for manufacturing an antenna structure, material is added to the base substrate, this is referred to as an "additive" process. In order to alleviate the disadvantage of unequal current distribution in the antenna in the case of the aforementioned additive manufacturing process, it is proposed in the document US-20030011523 A1, for the purpose of better current distribution in the antenna, to fix a temporary short-circuit clip across the windings of the antenna structure during the electroplating operation and to remove the short-circuit clip once electroplating is complete. Despite this measure, the current distribution in the antenna structure is still not optimal, and mass production with large substrate widths is difficult. A further disadvantage of this known method of manufacturing an antenna structure is that work has to be carried out directly on the substrate, and this increases the risk of faults.

In another document:US 2003/091789-A1, this discloses a method for making conductive circuits using powdered metals.

### OBJECT AND SUMMARY OF THE INVENTION

It is an object of the invention to provide a method of manufacturing an antenna structure of the type mentioned in the first paragraph and a data carrier of the type mentioned in the second paragraph, in which the abovementioned disadvantages are avoided.

In order to achieve the abovementioned object, an antenna structure manufacturing method according to the invention is provided with features according to the invention so that a method according to the invention can be characterized as follows, namely:

A method of manufacturing an antenna structure, which method comprises:
a) providing a process support,
b) applying a process support coating to a work surface of the process support,
c) producing a negative of the antenna structure in the process support coating by removing corresponding regions of the process support coating along the contours of the antenna structure to be produced,
d) introducing a release agent into the negative antenna structure of the process support coating,
e) introducing an electrically conductive antenna material into the negative antenna structure of the process support coating, optionally followed by curing of the antenna material,
f) joining the antenna material to an antenna substrate by means of an adhesive,
g) pulling the antenna structure off the process support, said antenna structure being joined to the antenna substrate and made of the antenna material.

In order to achieve the abovementioned object, such a data carrier is provided with an antenna structure manufactured in accordance with the antenna structure manufacturing method according to the invention.

By virtue of the features according to the invention, only a small amount of material has to be removed during manufacture of the antenna structure. The antenna structure manufacturing method according to the invention is an additive method. Unlike in the known additive methods, however, a uniform amount of electrically conductive material is applied over the entire length of the antenna without the use of additional aids, such as short-circuit clips. The antenna structure manufacturing method according to the invention can moreover be implemented as a continuous manufacturing method in mass industrial processes.

It may be mentioned that the document WO 03/107266 A1 discloses a method of manufacturing antennas for RFID (= Radio Frequency Identification) transponders, in which a highly electrically conductive film is applied to an intermediate support by means of a dry adhesive, then the shape of the antenna which is to be manufactured is cut into the film through to half the depth of the film, and then those regions of the film which are to be retained in order to form the antenna are coated with a high-strength adhesive and pressed onto the final antenna support. Once the adhesive has hardened, the intermediate support can be removed so that now only those sections of the film which form the antenna remain stuck to the final support, whereas the superfluous regions of the film are removed along with the intermediate support. This antenna manufacturing method is expensive in terms of material since the entire intermediate support and most of the film represent waste once they are removed, and moreover this waste is difficult to separate into its individual components on account of its adhesion. This technique differs considerably from the antenna structure manufacturing method according to the invention.

According to the measures of claim 2, the advantage is obtained that the release agent remains on the surface of the antenna structure and can act as a protective layer for the antenna structure.

According to the measures of claim 3, the advantage is obtained that the release agent can be used to manufacture a large number of antennas, and this ensures a highly resource-saving manufacturing method.

According to the measures of claim 4, the advantage is obtained that the electrically conductive antenna material can be introduced by means of a technologically perfected electroplating process.

According to the measures of claim 5, the advantage is obtained that the introduction of the electrically conductive antenna material takes place very quickly, and the antenna structure can thus be manufactured within a short period of time.

According to the measures of claim 6, the advantage is obtained that the antenna structure manufacturing method can be configured as a rotation process, and this means a very high manufacturing speed while the machine takes up a small amount of space.

According to the measures of claim 8, the advantage is obtained that the method can be carried out with a high saving in terms of material, and thus cost-effectively.

The abovementioned and other aspects of the invention will emerge from the example of embodiment described below and will be explained with reference to this example of embodiment.

### BRIEF DESCRIPTION OF THE DRAWINGS

The invention will be further described with reference to an example of embodiment shown in the drawings to which, however, the invention is not restricted.
Fig. 1 shows a diagram of the method according to the invention for manufacturing an antenna structure.
Fig. 2 schematically shows the method step of introducing an electrically conductive antenna material by means of an electroplating process.
Fig. 3 schematically shows a further embodiment of the method step of introducing an electrically conductive antenna material.
Fig. 4 shows a plan view of an RFID data carrier comprising an antenna structure manufactured according to the invention.

### DESCRIPTION OF EMBODIMENTS

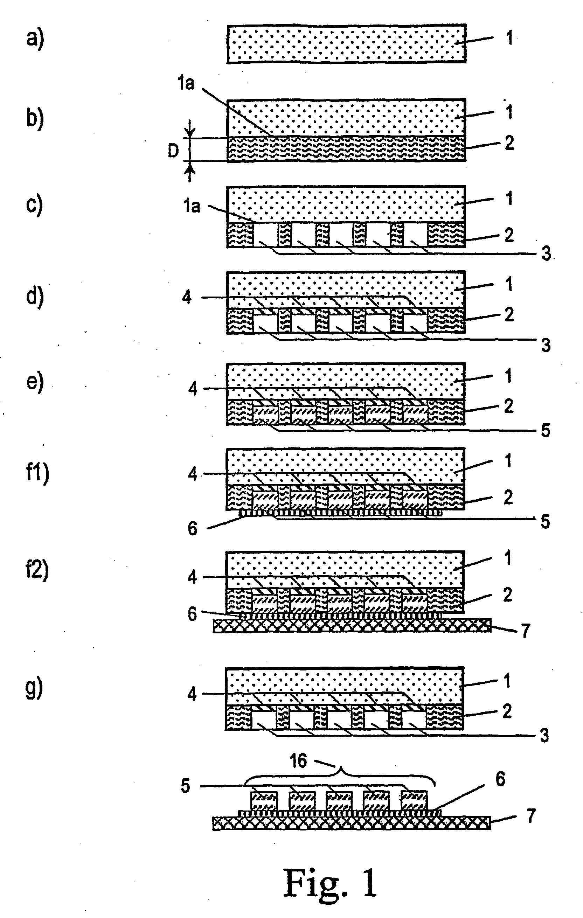

Fig. 1 shows a diagram of the method according to the invention for manufacturing an antenna structure, with reference to which the invention will be explained below. In step a) of the antenna structure manufacturing method according to the invention, a process support 1 is provided which has sufficient resistance to mechanical, thermal and chemical stress. Suitable materials for the process support 1 include, for example, copper, steel, aluminum or alloys comprising the aforementioned materials as a constituent. Applied to a work surface 1 a of the process support 1 in step b) is a process support coating 2, the thickness D of which corresponds approximately to the thickness of the antenna structure to be manufactured and typically lies in a range from a few µm to a few tenths of a mm. The requirement of sufficient resistance to mechanical, thermal and chemical stress during the method also applies in respect of the process support coating 2. Suitable materials for the process support coating 2 include, for example, varnishes, polytetrafluoroethylene (PTFE) layers, and plastic films and sheets. In step c), a negative 3 of the antenna structure to be manufactured is made in the process support coating 2 by removing regions of the process support coating 2 which correspond to the contours of the antenna structure. The corresponding regions of the process support coating 2 may be removed by chemical (e.g. etching) or mechanical processes, wherein mechanical processes include for example cutting (including laser cutting), milling and stamping. It should be mentioned that according to the invention it is also possible to swap the temporal order of method steps b) and c). Especially when stamping the negative 3 of the antenna structure to be manufactured in a process support coating 2 formed by a plastic film or a plastic sheet, the stamping operation is carried out first and then the process support coating 2 containing the negative 3 is applied to the process support 1.

In step d), a release agent 4 is then introduced into the negative antenna structure 3 of the process support coating. The release agent 4 makes it possible to detach the finished antenna structure from the process support 1 and from the process support coating 2 in a subsequent method step. Graphite powder has proven to be an advantageous material for the release agent 4.

In step e) of the antenna structure manufacturing method according to the invention, an electrically conductive antenna material 5 is introduced into the negative antenna structure 3 of the process support coating 2, possibly followed by curing of the antenna material 5.

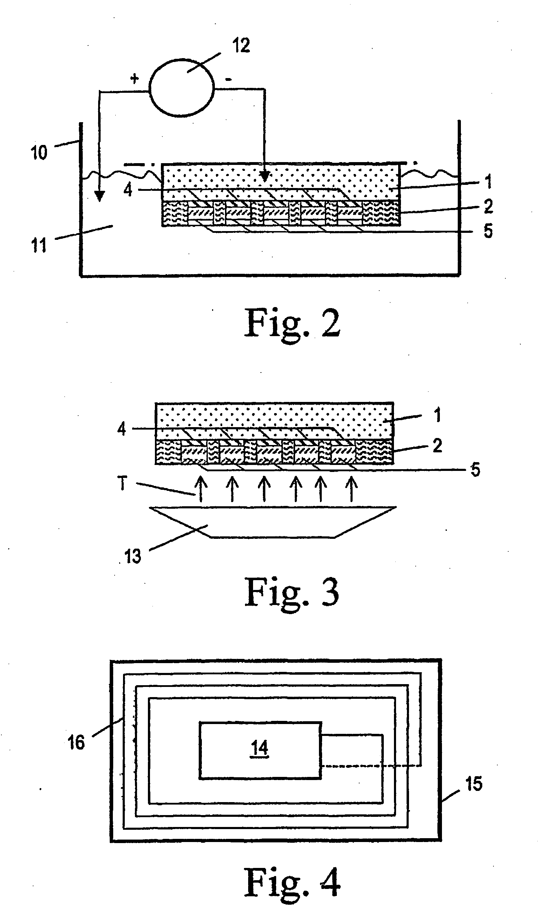

The introduction of the electrically conductive antenna material 5 into the negative antenna structure 3 may preferably take place by an electroplating process shown schematically in Fig. 2. The complex consisting of the process support 1 and the process support coating 2 containing the negative antenna structure is dipped into an electrolyte basin 10 which contains an electrolyte liquid 11. The process support 1 is designed as a cylinder. A DC voltage source 12 is connected by its negative pole to the process support 1 and by its positive pole to the electrolyte liquid 11, which contains dissolved particles (ions) of the antenna material 5. By virtue of the application of the electrical voltage, the ions of the antenna material 5 which are contained in the electrolyte liquid 11 migrate toward the negative antenna structure 3 and accumulate therein. The antenna material 5 comprises very highly electrically conductive materials, preferably metals such as copper or aluminum. In order for it to be possible for the described electroplating method to be carried out, the following prerequisites must be satisfied: The process support 1 and the release agent 4 must consist of electrically conductive material, whereas the process support coating 2 consists of electrically insulating material. The production of a negative 3 of the antenna structure in the process support coating 2 is carried out in such a way that the regions of the process support coating 2 which define the antenna structure to be produced are removed through the entire thickness D of the process support coating 2, so that in these regions the work surface 1a of the process support 1 is exposed and can be covered by the conductive release agent 4. Since an electrically conductive contact thus exists in the negative antenna structure 3 between the release agent 4 and the electrolyte liquid 11, electroplating of the antenna material 5 into the negative antenna structure 3 is ensured.

Fig. 3 schematically shows an alternative embodiment of step e) of introducing the electrically conductive antenna material 5 into the negative antenna structure 3. The electrically conductive antenna material 5 is introduced into the negative antenna structure 3 of the process support coating 2 in the form of a solder paste, possibly even a solder powder, wherein the introduction may take place by printing, injection or the like. Unlike the silver paste used in the prior art, the solder paste has excellent electrical conductivity and therefore does not have to be subsequently coated with other conductive materials. In order that the solder paste distributes uniformly in the negative antenna structure 3, it is heated to above its melting point (schematically shown by exposure to thermal radiation T from the electric heating unit 13) and then cured by cooling. It should be mentioned that, in this variant of the method step of introducing the electrically conductive antenna material 5 into the negative antenna structure 3, it is not necessary for the process support 1 and/or the release agent 4 to be electrically conductive, since no electroplating is carried out. It is also not necessary for the process support coating 2 to be electrically insulating.

Returning now to Fig. 1, the next step in the antenna structure manufacturing method according to the invention is the application of an adhesive 6 to the antenna material 5 (shown as step f1 in the figure) and the pressing of an antenna substrate 7 onto the exposed surfaces of the adhesive 6. The adhesive may advantageously be applied by a roller process. The type of adhesive is not restricted by any greater detail; by way of example, use may be made of dry adhesives, pressure adhesives, films which exert an adhesive force at an increased temperature (heat-sealing films), liquid adhesives or UV-curing adhesives. It should be mentioned that according to the invention the adhesive 6 may also first be applied to the antenna substrate 7, and then the assembly consisting of antenna substrate 7 and adhesive is stuck onto the antenna material 5. Suitable materials for the antenna substrate 7 include, for example, paper and plastic films or sheets which are made of PVC, PA, PE or the like. Fabrics are also suitable as antenna substrate 7, so that the antenna structure according to the invention can also be installed in labels.

The antenna structure manufacturing method according to the invention is then completed by step g) of pulling the antenna structure 16 off the process support 1, said antenna structure being joined to the antenna substrate 7 and being formed by the antenna material 5.

Returning once again to step d) of the antenna structure manufacturing method according to the invention, it should be mentioned that the adhesive force which binds the release agent 4 to the process support 1 and to the process support coating 2 on the one hand and to the antenna material 5 on the other hand can be set either such that the release agent 4 is also pulled off when the antenna material 5 designed as an antenna structure is pulled off the process support 1, or such that the release agent 4 remains on the process support 1 and possibly on the process support coating 2 when the antenna material 5 designed as an antenna structure is pulled off the process support 1. In the latter case, the release agent 4 can be used for the successive manufacture of a number of antenna structures.

Fig. 4 shows in plan view an RFID data carrier 14 which is arranged on a data carrier substrate 15 and is connected to an antenna structure 16 which has been manufactured in accordance with the antenna structure manufacturing method according to the invention. The antenna structure 16 may be situated on a dedicated antenna substrate which is connected to the data carrier substrate 15. However, the data carrier substrate 15 is advantageously also used as an antenna substrate for the antenna structure 16.

## Claims

1. A method of manufacturing an antenna structure (16) for RFID, which method comprises:
a) providing a process support (1),
b) applying a process support coating (2) to a work surface (1a) of the process support (1),
c) producing a negative (3) of the antenna structure in the process support coating (2) by removing corresponding regions of the process support coating along the contours of the antenna structure to be produced,
and **characterized by**
d) introducing a release agent (4) into the negative antenna structure (3) of the process support coating,
e) introducing an electrically conductive antenna material (5) into the negative antenna structure (3) of the process support coating (2), optionally followed by curing of the antenna material (5),
f) joining the antenna material (5) to an antenna substrate (7) by means of an adhesive (6), '
g) pulling the antenna structure (16) off the process support (1), said antenna structure being joined to the antenna substrate (7) and made of the antenna material (5).

2. An antenna structure manufacturing method as claimed in claim 1, wherein the release agent (4) is also pulled off when the antenna structure (16) is pulled off the process support (1).

3. An antenna structure manufacturing method as claimed in claim 1, wherein the release agent (4) remains on the process support (1) and possibly on the process support coating (2) when the antenna structure (16) is pulled off the process support (1).

4. An antenna structure manufacturing method as claimed in claim 1, wherein the process support (1) and the release agent (4) are electrically conductive, the process support coating (2) is electrically insulating, the production of a negative (3) of the antenna structure in the process support coating (2) comprises removing corresponding regions of the process support coating, according to the antenna structure to be produced, down to the process support work surface (1a), the release agent (4) is applied to the process support work surface (1a), and the introduction of the electrically conductive antenna material (5) into the negative antenna structure (3) comprises electroplating the antenna material (5) into the negative antenna structure.

5. An antenna structure manufacturing method as claimed in claim 1, wherein the introduction of an electrically conductive antenna material (5) into the negative antenna structure (3) of the process support coating (2) comprises introducing a solder paste, melting the solder paste in order to distribute it uniformly in the negative antenna structure, and curing the molten solder paste.

6. An antenna structure manufacturing method as claimed in claim 1, wherein the process support (1) is designed as a cylinder.

7. A data carrier (14), comprising an antenna structure (16) which is manufactured as claimed in any of claims 1 to 6.

8. A data carrier as claimed in claim 7, comprising a data carrier substrate (15) which at the same time serves as antenna substrate.

## Patentansprüche

1. Verfahren zur Herstellung einer Antennenstruktur (16) für RFID, wobei das Verfahren umfasst:
a) Bereitstellen eines Prozessträgers (1),
b) Aufbringen einer Prozessträger-Beschichtung (2) auf eine Arbeitsfläche (1a) des Prozessträgers (1),
c) Erzeugen eines Negativs (3) der Antennenstruktur in der Prozessträger-Beschichtung (2) durch Entfernen entsprechender Bereiche der Prozessträger-Beschichtung entlang den Umrissen der zu erzeugenden Antennenstruktur,
und **gekennzeichnet durch**
d) Einbringen eines Trennmittels (4) in die Negativ-Antennenstruktur (3) der Prozessträger-Beschichtung,
e) Einbringen eines elektrisch leitfähigen Antennenmaterials (5) in die Negativ-Antennenstruktur (3) der Prozessträger-Beschichtung (2), optional gefolgt vom Aushärten des Antennenmaterials (5),
f) Verbinden des Antennenmaterials (5) mit einem Antennensubstrat (7) mittels eines Klebers (6),
g) Abziehen der mit dem Antennensubstrat (7) verbundenen und aus dem Antennenmaterial (5) gefertigten Antennenstruktur (16) von dem Prozessträger (1).

2. Antennenstruktur-Herstellungsverfahren nach Anspruch 1, wobei bei Abziehen der Antennenstruktur (16) von dem Prozessträger (1) das Trennmittel (4) ebenfalls abgezogen wird.

3. Antennenstruktur-Herstellungsverfahren nach Anspruch 1, wobei bei Abziehen der Antennenstruktur (16) von dem Prozessträger (1) das Trennmittel (4) auf dem Prozessträger (1) und gegebenenfalls an der Prozessträger-Beschichtung (2) verbleibt.

4. Antennenstruktur-Herstellungsverfahren nach Anspruch 1, wobei der Prozessträger (1) und das Trennmittel (4) elektrisch leitfähig sind, die Prozessträger-Beschichtung (2) elektrisch isolierend ist, das Erzeugen eines Negativs (3) der Antennenstruktur in der Prozessträger-Beschichtung (2) das Entfernen entsprechender Bereiche der Prozessträger-Beschichtung gemäß der zu erzeugenden Antennenstruktur bis hinab zu der Prozessträger-Arbeitsfläche (1a) umfasst, das Trennmittel (4) auf die Prozessträger-Arbeitsfläche (1 a) aufgebracht wird, und das Einbringen des elektrisch leitfähigen Antennenmaterials (5) in die Negativ-Antennenstruktur (3) das galvanische Abscheiden des Antennenmaterials (5) in die Negativ-Antennenstruktur umfasst.

5. Antennenstruktur-Herstellungsverfahren nach Anspruch 1, wobei das Einbringen eines elektrisch leitfähigen Antennenmaterials (5) in die Negativ-Antennenstruktur (3) der Prozessträger-Beschichtung (2) das Einbringen einer Lötpaste, das Schmelzen der Lötpaste zur gleichmäßigen Verteilung in der Negativ-Antennenstruktur und das Aushärten der geschmolzenen Lötpaste umfasst.

6. Antennenstruktur-Herstellungsverfahren nach Anspruch 1, wobei der Prozessträger (1) als ein Zylinder ausgebildet ist.

7. Datenträger (14), umfassend eine Antennenstruktur (16), die nach einem der Ansprüche 1 bis 6 hergestellt ist.

8. Datenträger nach Anspruch 7, umfassend ein Datenträgersubstrat (15), das gleichzeitig als ein Antennensubstrat dient.

## Revendications

1. Procédé de fabrication de structure d'antenne (16) pour RFID, lequel procédé comprend les étapes consistant à :
a) pourvoir un support de processus (1) ;
b) appliquer un revêtement de support de processus (2) sur une surface de travail (1a) du support de processus (1) ;
c) produire un négatif (3) de la structure d'antenne dans le revêtement de support de processus (2) en enlevant les régions correspondantes du revêtement de support de processus le long des contours de la structure d'antenne à produire, et **caractérisé par** les étapes consistant à :
d) introduire un agent de séparation (4) dans la structure d'antenne en négatif (3) du revêtement de support de processus,
e) introduire un matériau d'antenne électriquement conducteur (5) dans la structure d'antenne en négatif (3) du revêtement de support de processus (2), étape facultativement suivie par un traitement thermique du matériau d'antenne (5) ;
f) relier le matériau d'antenne (5) avec un substrat d'antenne (7) au moyen d'un adhésif (6) ;
g) peler la structure d'antenne (16) du support de processus (1), ladite structure d'antenne étant reliée au substrat d'antenne (7) et constituée du matériau d'antenne (5).

2. Procédé de fabrication de structure d'antenne tel que revendiqué dans la revendication 1, dans lequel l'agent de séparation (4) est également pelé lorsque la structure d'antenne (16) est pelée du support de processus (1).

3. Procédé de fabrication de structure d'antenne tel que revendiqué dans la revendication 1, dans lequel l'agent de séparation (4) reste sur le support de processus (1) et peut-être sur le revêtement de support de processus (2) lorsque la structure d'antenne (16) est pelée du support de processus (1).

4. Procédé de fabrication de structure d'antenne tel que revendiqué dans la revendication 1, dans lequel le support de processus (1) et l'agent de pelage (4) sont électriquement conducteurs, le revêtement de support de processus (2) est électriquement isolant, la production d'une structure d'antenne en négatif (3) dans le revêtement de support de processus (2) comprend d'enlever des régions correspondantes du revêtement de support de processus, selon la structure d'antenne à produire, jusqu'à la surface de travail du support de processus (la), l'agent de séparation (4) est appliqué à la surface de travail du support de processus (la), et l'introduction du matériau d'antenne électriquement conducteur (5) dans la structure d'antenne en négatif (3) comprend un dépôt électrolytique du matériau d'antenne (5) dans la structure d'antenne en négatif.

5. Procédé de fabrication de structure d'antenne tel que revendiqué dans la revendication 1, dans lequel l'introduction d'un matériau d'antenne électriquement conducteur (5) dans la structure d'antenne en négatif (3) du revêtement de support de processus (2) comprend d'introduire une pâte à braser, de faire fondre la pâte à braser de manière à la répartir de manière uniforme dans la structure d'antenne en négatif, et de faire durcir la pâte à braser fondue.

6. Procédé de fabrication de structure d'antenne tel que revendiqué dans la revendication 1, dans lequel le support de processus (1) est conçu sous la forme d'un cylindre.

7. Support de données (14), comprenant une structure d'antenne (16) qui est fabriqué tel que cela est revendiqué dans l'une quelconque des revendications 1 à 6.

8. Support de données tel que revendiqué dans la revendication 7, comprenant un substrat support de données (15) qui sert en même temps de substrat d'antenne.
